# EUROPEAN PATENT APPLICATION

(11) **EP 4 412 129 A1**
(43) Date of publication of application: **07.08.2024**
(21) Application number: 21963544.8
(22) Date of filing: 10.11.2021
(51) Int. Cl.: H04L 5/00, H04W 72/54

(54) **CONTROL SIGNALING TRANSMISSION METHOD, COMMUNICATION NODE, AND BASE STATION**

(71) Applicant: Huawei Technologies Co., Ltd., Shenzhen, Guangdong 518129 (CN)
(72) Inventor: TONG, Haoran, Shenzhen, Guangdong 518129 (CN); ZHAO, Xing, Shenzhen, Guangdong 518129 (CN); GUO, Chunlong, Shenzhen, Guangdong 518129 (CN); YAO, Liang, Shenzhen, Guangdong 518129 (CN)
(74) Representative: Pfenning, Meinig & Partner mbB
(86) International application number: PCT/CN2021/129760
(87) International publication number: WO 2023/082087

(57) **Abstract**

Embodiments of this application provide a control signaling transmission method, a communication node, and a base station. The method includes: A first communication node obtains first control signaling. The first communication node sends the first control signaling to a second communication node by using a first frame slice of a first data frame. The first frame slice is obtained by dividing the first data frame in a time dimension. The method can meet a communication requirement for control with high real-time performance on a premise of low bandwidth.

## Description

### TECHNICAL FIELD

This application relates to the field of communication base station technologies, and in particular, to a control signaling transmission method, a communication node, and a base station.

### BACKGROUND

In a conventional wireless base station system, a baseband unit, a hub unit, and each remote radio unit are interconnected mainly by using a common public radio interface (common public radio interface, CPRI) or an open base station architecture initiative (open base station architecture initiative, OBSAI) interface. Service data in the CPRI/OBSAI interface occupies most of bandwidth. As a service capacity of a base station increases, an interface transmission bandwidth bottleneck becomes increasingly prominent, and costs of matched components, for example, an optical module or an interface chip, of the interface are relatively high.

If the service data is stripped, using a universal asynchronous receiver/transmitter (universal asynchronous receiver/transmitter, UART) interface to exchange control plane data only can reduce an interface bandwidth requirement.

However, because UART is an asynchronous serial port communication protocol, UART interface-based device interconnection cannot meet a base station communication requirement for control with high real-time performance.

### SUMMARY

Embodiments of this application provide a control signaling transmission method, a communication node, and a base station, to meet a communication requirement for control with high real-time performance on a premise of low bandwidth.

A first aspect of embodiments of this application provides a control signaling transmission method, including: A first communication node obtains first control signaling. The first communication node sends the first control signaling to a second communication node by using a first frame slice of a first data frame. The first frame slice is obtained by dividing the first data frame in a time dimension.

According to the control signaling transmission method provided in embodiments of this application, the first communication node sends the first control signaling by using the frame slice. The frame slice is obtained by dividing the data frame in the time dimension, and the frame slice obtained by performing timing-based division based on timing of a radio frame can meet communication requirements for high-precision synchronization and control with high real-time performance.

In a possible implementation of the first aspect, the first frame slice includes a first subframe, and the first subframe is any one of a plurality of subframes obtained by equally dividing the first data frame in the time dimension by using a first preset slice quantity.

According to the control signaling transmission method provided in this embodiment of this application, the data frame may be equally divided into a plurality of subframes based on a preset slice quantity, and each subframe may be used to send control signaling. Timing-based division may usually be performed based on a related matched service time slice. For example, one radio frame of 10 ms may be divided into 10 subframes of 1 ms, and the subframes are used to send different control signaling.

In a possible implementation of the first aspect, the first frame slice includes a first slot, and the first slot is any one of a plurality of slots obtained by equally dividing the first subframe in the time dimension by using a second preset slice quantity.

According to the control signaling transmission method provided in this embodiment of this application, based on the foregoing implementation, the subframe may be further divided in the time dimension. For example, one subframe is divided into eight slots, and the slots are used to carry different services, for example, 4G control signaling or 5G control signaling.

In a possible implementation of the first aspect, the first frame slice includes a part of the first slot.

According to the control signaling transmission method provided in this embodiment of this application, a quantity of layers of slices obtained by dividing the data frame is not limited, in other words, the slot may be further divided. Hierarchically dividing the data frame into slices can enable a flexible frame structure to carry more functions, for example, meet functions such as synchronous timing, message communication, and real-time control, and have a relatively flexible networking expansion capability without increasing additional hardware consumption.

In a possible implementation of the first aspect, the first data frame includes n channel sequences, the n channel sequences are obtained by dividing the first data frame in the time dimension, each channel sequence includes m ordered channels, the first frame slice includes a first control channel, and the first control channel includes one or more of the m channels, and is used to implement a first control function.

According to the control signaling transmission method provided in this embodiment of this application, control signaling is exchanged by using a specially designed data frame structure. The frame structure may be referred to as a minimum packet unit. The minimum packet unit includes a plurality of channel sequences, and each channel sequence includes a plurality of ordered channels. One control function may be implemented by using one or more channels. Each minimum packet unit may carry synchronization information, so that an anti-interference capability is strong, and robustness is stronger. These channels may be activated or not activated or used in any combination. The flexible frame structure can carry more functions, and have a relatively flexible networking expansion capability.

In a possible implementation of the first aspect, a plurality of subframes obtained by equally dividing the first data frame in the time dimension by using a first preset slice quantity include a first subframe, the first subframe includes n channel sequences, the n channel sequences are obtained by dividing the first subframe in the time dimension, each channel sequence includes m ordered channels, the first frame slice includes a first control channel, the first control channel includes one or more of the m channels, and the first control channel is used to implement a first control function.

According to the control signaling transmission method provided in this embodiment of this application, the first data frame may be designed with a combination of equal division and a minimum packet unit. For example, the data frame is equally divided into subframes, and then the subframes are further divided in a form of minimum packet units. The flexible frame structure can also carry and derive more functions, so that feasibility of the solution is improved.

In a possible implementation of the first aspect, the first control channel includes a synchronization channel, a control channel, an operation and maintenance OM channel, a fast control channel, a code check channel, or an extensible vendor-specific channel.

According to the control signaling transmission method provided in this embodiment of this application, control channel types are diversified, and more functions can be carried.

In a possible implementation of the first aspect, before the first communication node sends the first control signaling to the second communication node by using the first frame slice of the first data frame, the method further includes: The first communication node sends a synchronization frame to the second communication node. The first communication node receives synchronization confirmation information returned by the second communication node. The first communication node sets a port working mode to a working state based on the synchronization confirmation information. The working state is used to send real-time control signaling to the second communication node, and the control signaling includes the first control signaling.

According to the control signaling transmission method provided in this embodiment of this application, the communication nodes may first perform synchronization by using the synchronization frame. Specifically, a frame header of the synchronization frame carries synchronization information, and a data field of the synchronization frame is set to 0. Optionally, the synchronization frame carries status information, the status information indicates a status existing when the first communication node sends the synchronization frame, and the status includes an initial state or a synchronization state. The communication nodes implement synchronization through status negotiation. The second communication node returns the synchronization confirmation information to the second communication node, and further, the port working mode is set to the working state, so that control signaling can start to be sent/received. The link negotiation mechanism can further ensure interface stability and robustness.

In a possible implementation of the first aspect, the first communication node receives second control signaling sent by the second communication node by using a second frame slice of a second data frame. The second frame slice is obtained by dividing the first data frame in the time dimension. The first communication node performs an action based on the second control signaling.

According to the control signaling transmission method provided in this embodiment of this application, the communication node may send/receive control signaling by using a preset data frame format, so that a plurality of control functions such as interconnection and timing are carried, to meet communication requirements for high-precision synchronization and control with high real-time performance on a premise of low bandwidth.

A second aspect of embodiments of this application provides a communication node, including: an obtaining unit, configured to obtain first control signaling; and a sending unit, configured to send the first control signaling to a second communication node by using a first frame slice of a first data frame. The first frame slice is obtained by dividing the first data frame in a time dimension.

In a possible implementation of the second aspect, the first frame slice includes a first subframe, and the first subframe is any one of a plurality of subframes obtained by equally dividing the first data frame in the time dimension by using a first preset slice quantity.

In a possible implementation of the second aspect, the first frame slice includes a first slot, and the first slot is any one of a plurality of slots obtained by equally dividing the first subframe in the time dimension by using a second preset slice quantity.

In a possible implementation of the second aspect, the first frame slice includes a part of the first slot.

In a possible implementation of the second aspect, the first data frame includes n channel sequences, the n channel sequences are obtained by dividing the first data frame in the time dimension, each channel sequence includes m ordered channels, the first frame slice includes a first control channel, and the first control channel includes one or more of the m channels, and is used to implement a first control function.

In a possible implementation of the second aspect, a plurality of subframes obtained by equally dividing the first data frame in the time dimension by using a first preset slice quantity include a first subframe, the first subframe includes n channel sequences, the n channel sequences are obtained by dividing the first subframe in the time dimension, each channel sequence includes m ordered channels, the first frame slice includes a first control channel, the first control channel includes one or more of the m channels, and the first control channel is used to implement a first control function. The m channels are obtained by dividing the channel sequence in the time dimension.

In a possible implementation of the second aspect, the first control channel includes a synchronization channel, a control channel, an operation and maintenance OM channel, a fast control channel, a code check channel, or an extensible vendor-specific channel.

In a possible implementation of the second aspect, the sending unit is further configured to send a synchronization frame to the second communication node. The communication node further includes: a receiving unit, configured to receive synchronization confirmation information returned by the second communication node; and a processing unit, configured to set a port working mode to a working state based on the synchronization confirmation information. The working state is used to send real-time control signaling to the second communication node, and the control signaling includes the first control signaling.

In a possible implementation of the second aspect, the receiving unit is further configured to receive second control signaling sent by the second communication node by using a second frame slice of a second data frame. The second frame slice is obtained by dividing the first data frame in the time dimension. The processing unit is further configured to perform an action based on the second control signaling.

A third aspect of embodiments of this application provides a communication node, including a communication interface, one or more processors, and a memory. The communication interface is configured to send/receive control signaling, the memory stores computer-readable instructions, and the one or more processors read the computer-readable instructions, so that the communication node is enabled to implement the method according to any one of the implementations of the first aspect.

A fourth aspect of embodiments of this application provides a base station, including at least two communication nodes. The communication nodes are configured to implement the method according to any one of the implementations of the first aspect.

A fifth aspect of embodiments of this application provides a computer program product including instructions. When the computer program product runs on a computer, the computer is enabled to perform the method according to any one of the first aspect and the possible implementations.

A sixth aspect of embodiments of this application provides a computer-readable storage medium, including instructions. When the instructions are run on a computer, the computer is enabled to perform the method according to any one of the first aspect and the possible implementations.

According to the control signaling transmission method provided in embodiments of this application, the first communication node sends the first control signaling by using the frame slice. The frame slice is obtained by dividing the data frame in the time dimension, and the frame slice obtained by performing timing-based division based on the data frame can meet communication requirements for high-precision synchronization and control with high real-time performance.

According to the control signaling transmission method provided in embodiments of this application, a multi-function interface based on a communication node can meet functions such as synchronous timing, message communication, and real-time control between communication nodes. In addition, evolution of communication bandwidth may be decoupled from a service capacity, so that system complexity and software and hardware overheads can be reduced. More functions can be carried and derived based on a flexible frame structure. In addition, the link negotiation mechanism can further ensure interface stability and robustness.

### BRIEF DESCRIPTION OF DRAWINGS

FIG. 1 is a diagram of interconnection of a base station system;
FIG. 2 is a diagram of a system architecture of a control signaling transmission method according to an embodiment of this application;
FIG. 3 is a diagram of an embodiment of a control signaling transmission method according to embodiments of this application;
FIG. 4 is a diagram of an embodiment of a data frame structure in a control signaling transmission method according to embodiments of this application;
FIG. 5 is a diagram of another embodiment of a data frame structure in a control signaling transmission method according to embodiments of this application;
FIG. 6 is a diagram of another embodiment of a data frame structure in a control signaling transmission method according to embodiments of this application;
FIG. 7 is a diagram of another embodiment of a data frame structure in a control signaling transmission method according to embodiments of this application;
FIG. 8 is a diagram of an embodiment of interaction of a control signaling transmission method according to embodiments of this application;
FIG. 9 is a diagram of another embodiment of a data frame structure in a control signaling transmission method according to embodiments of this application;
FIG. 10 is a diagram of an embodiment of a communication node according to embodiment of this application; and
FIG. 11 is a diagram of another embodiment of a communication node according to embodiments of this application.

### DESCRIPTION OF EMBODIMENTS

Embodiments of this application provide a control signaling transmission method, a communication node, and a base station, to meet a communication requirement for control with high real-time performance on a premise of low bandwidth.

For ease of understanding, some technical terms in embodiments of this application are briefly described below.

| Simplified Chinese Simplified Chinese | English English | Acronym/Abbreviation Acronym/Abbreviation |
|---|---|---|
| Common public radio interface | Common public radio interface | CPRI |
| Open base station architecture initiative | Open base station architecture initiative | OBSAI |
| Universal asynchronous receiver/transmitter | Universal asynchronous receiver/transmitter | UART |
| Radio over fiber | Radio over fiber | RoF |
| Baseband unit | Baseband unit | BBU |
| Remote radio unit | Remote radio unit | RRU |

The following describes embodiments of this application with reference to the accompanying drawings. Clearly, the described embodiments are merely some rather than all of embodiments of this application. Persons of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that embodiments described herein can be implemented in other orders than the order illustrated or described herein. Moreover, the terms "include", "contain", and any other variants thereof mean to cover the non-exclusive inclusion, for example, a process, method, system, product, or device that includes a list of steps or modules is not necessarily limited to those steps or modules expressly listed, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

It should be noted that the "module" described in embodiments of this application may be a circuit constructed by a circuit, a function module implemented by a software program, or a module implemented jointly by a circuit and a software program. This is not specifically limited in embodiments of this application. It may be understood that each module may be an integrated module, or may be an independent module. This is not specifically limited in embodiments of this application.

The solutions in embodiments of this application may be applied to long term evolution (long term evolution, LTE), a fifth generation (5 Generation, 5G) mobile communication system, or a future mobile communication system.

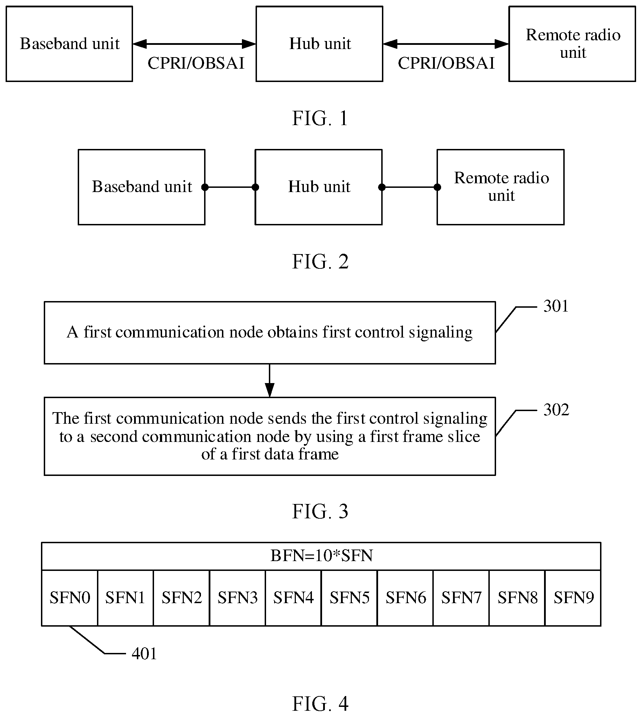

Refer to FIG. 1. Generally, a wireless base station system may include three parts: a baseband unit, a hub (HUB) unit, and a remote radio unit. Interconnection and communication between communication nodes such as the baseband unit, the hub unit, and each remote radio unit are usually implemented by using a CPRI/OBSAI interface. A public radio interface (common public radio Interface, CPRI) may be used between a central unit and the hub unit to exchange a digital signal on an optical fiber. The hub unit and the remote radio unit may exchange a digital signal through the CPRI interface, or may exchange an intermediate-frequency analog signal through a cable. In addition, the baseband unit, the hub unit, and the remote radio unit may alternatively communicate with each other by using the OBSAI interface.

With evolution of 5G and a future more advanced communication system, a wireless communication base station needs more frequency bands, more radio frequency channels, and larger radio frequency bandwidth, to support a higher capacity requirement.

A service related data plane payload (IQ Data) is an important factor that affects bandwidth of the CPRI/OBSAI interface. As a service capacity of the base station increases, the bandwidth of the CPRI/OBSAI interface is continuously increasing. Currently, 25G has become the mainstream, and a 50G standard will be released soon. The interface bandwidth increases, engineering consumption is large, and evolution space is limited. In addition, costs of related matched components of the interface, for example, an optical module or an interface chip, are high.

To prevent the interface bandwidth from continuously increasing, in consideration of relatively low bandwidth occupied by control data, service data may be stripped to reduce transmission pressure on the interface. In a solution, communication nodes are interconnected based on a UART interface. In this solution, service data is stripped from the interface. Because a bandwidth requirement of a remaining synchronization plane or control plane is relatively low, a problem of excessively high interface bandwidth is avoided. However, as an asynchronous serial port communication protocol, a UART protocol cannot carry high-precision timing of the base station, and cannot meet a requirement of the wireless base station for control with high real-time performance.

Therefore, embodiments of this application provide a control signaling transmission method, and a cost-effective multi-service optical fiber radio access system and networking solution based on the method, so that control signaling transmission with high-precision synchronization between base station communication nodes can be implemented on a premise of low bandwidth, and a communication requirement for control with high real-time performance can be met.

The following describes the control signaling transmission method, a communication node, and a base station in detail with reference to the accompanying drawings.

First, a system architecture of the control signaling transmission method is described. Refer to FIG. 2.

A wireless base station includes a baseband unit, a hub unit, and a remote radio unit. There may be one or more remote radio units. A specific quantity is not limited herein. The control signaling transmission method provided in embodiments of this application may be applied between the baseband unit and the hub unit, or may be applied between the hub unit and the remote radio unit. In other words, a first communication node may be any one of the baseband unit, the hub unit, and the remote radio unit.

Based on the system architecture shown in FIG. 2, the following describes a control signaling transmission method. Refer to FIG. 3.

301: A first communication node obtains first control signaling.

The first communication node obtains the first control signaling. The first control signaling may be generated by the first communication node, or may be obtained from a third communication node. This is not specifically limited herein. The first control signaling indicates an action of a second communication node.

302: The first communication node sends the first control signaling to the second communication node by using a first frame slice of a first data frame.

The first communication node sends the first control signaling to the second communication node by using the first frame slice of the first data frame. The first frame slice is obtained by dividing the first data frame in a time dimension. The first communication node may specifically send the first control signaling to the second communication node through a communication interface on the first communication node. In this application, the control signaling is sent through the communication interface in a form of a data frame slice. The data frame may be in a plurality of forms. The following provides detailed descriptions.

In a possible implementation, the first frame slice includes a first subframe, and the first subframe is any one of a plurality of subframes obtained by equally dividing the first data frame in the time dimension by using a first preset slice quantity. Specifically, the data frame may be equally divided into a plurality of contiguous subframes based on a preset slice quantity, and each subframe may be used to send control signaling. Timing-based division may usually be performed based on a related matched service time slice. For example, refer to FIG. 4. One radio frame (BFN) of 10 ms is divided into 10 subframes (SFN) of 1 ms, and the subframes are used to send different control signaling. For example, SFN0 401 is used to send first control signaling.

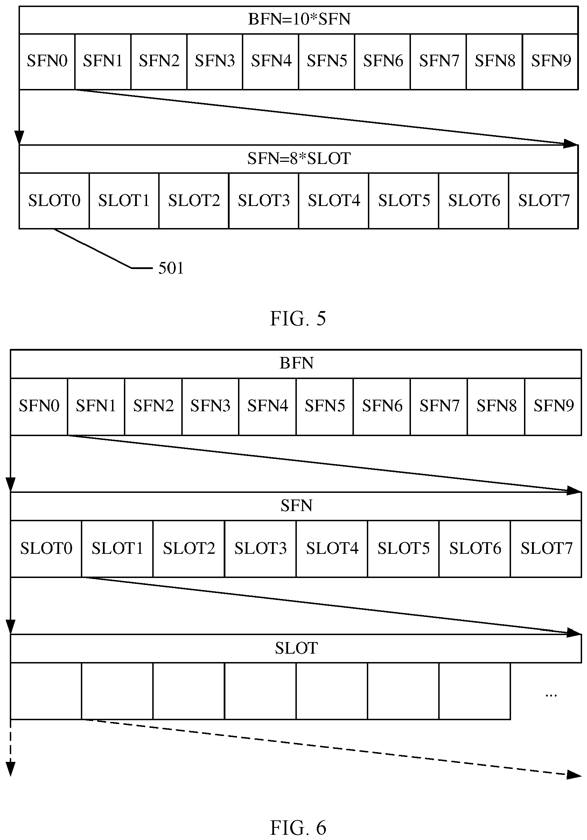

In a possible implementation, the first frame slice includes a first slot, and the first slot is any one of a plurality of slots obtained by equally dividing the first subframe in the time dimension by using a second preset slice quantity. Refer to FIG. 5. Based on the foregoing implementation, the subframe may be further divided in the time dimension. For example, one subframe (SFN) is divided into eight slots (SLOT), and the slots, for example, SLOT0 501, are used to carry different services, for example, 4G control signaling or 5G control signaling.

In a possible implementation, the first frame slice includes a part of the first slot. Refer to FIG. 6. In the data frame, a quantity of layers of slices obtained by dividing the data frame is not limited, in other words, the slot may be further divided. Hierarchically dividing the data frame into slices can enable a flexible frame structure to carry more functions, for example, meet functions such as synchronous timing, message communication, and real-time control, and have a relatively flexible networking expansion capability without increasing additional hardware consumption.

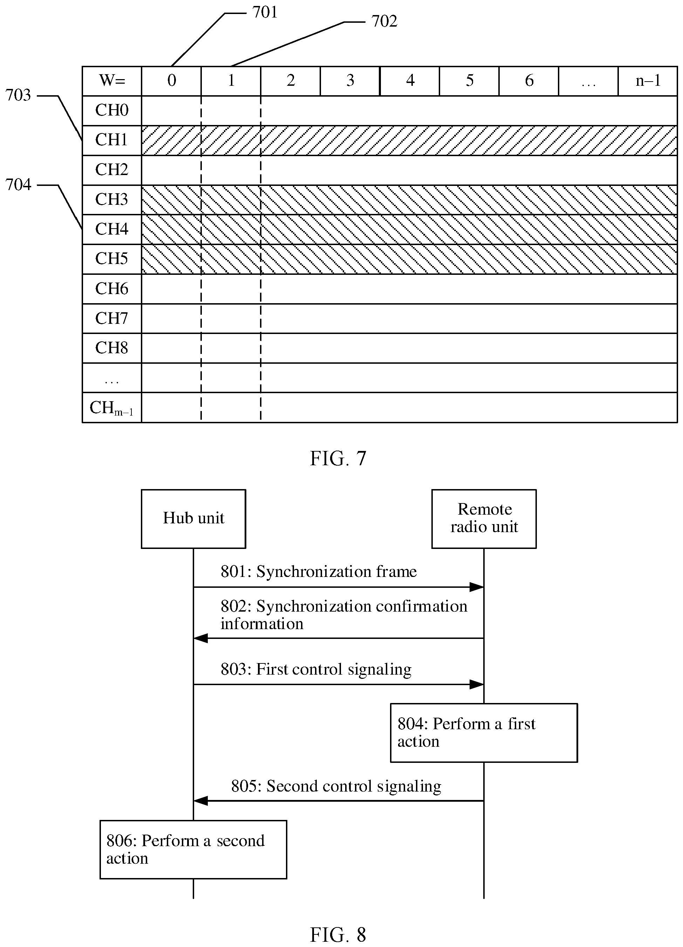

In a possible implementation, the first data frame includes n channel sequences, the n channel sequences are obtained by dividing the first data frame in the time dimension, each channel sequence includes m ordered channels, the first frame slice includes a first control channel, the first control channel includes one or more of the m channels, and the first control channel is used to implement a first control function. The m channels are obtained by dividing the channel sequence in the time dimension. Refer to FIG. 7. The data frame includes n channel sequences, for example, a channel sequence 701 and a channel sequence 702. Each channel sequence is divided into m channels. For example, the channel sequence 701 includes a total of m channels from CH₀ to CHₘ₋₁. Similarly, each channel sequence includes m channels. In a transmission process, transmission is performed based on an order of the channel sequences, and transmission is performed based on an order of channels in each channel sequence. Channels with a same sequence number in the channel sequences constitute one control channel or a part of one control channel, and are used to carry one type of control signaling. For example, a first control channel CH₁ 703 (an area filled with slashes in an upper right direction in FIG. 7) includes a second channel, and is used to exchange first control signaling; and a second control channel CH₃, CH₄, and CH₅ 704 (an area filled with slashes in a lower right direction in FIG. 7) includes a third channel, a fourth channel, and a fifth channel, and is used to exchange second control signaling. The frame structure may be referred to as a minimum packet unit. The minimum packet unit includes a plurality of channel sequences, and each channel sequence includes a plurality of ordered channels. One control function may be implemented by using one or more channels. These channels may be activated or not activated or used in any combination. The flexible frame structure can carry more functions, and have a relatively flexible networking expansion capability.

In a possible implementation, a plurality of subframes obtained by equally dividing the first data frame in the time dimension by using a first preset slice quantity include a first subframe, the first subframe includes n channel sequences, the n channel sequences are obtained by dividing the first subframe in the time dimension, each channel sequence includes m ordered channels, the first frame slice includes a first control channel, the first control channel includes one or more of the m channels, and the first control channel is used to implement a first control function. In this implementation, the data frame may be designed with a combination of equal division and a minimum packet unit. For example, the data frame is equally divided into subframes, and then the subframes are further divided in a form of minimum packet units. The flexible frame structure can also carry and derive more functions, so that feasibility of the solution is improved.

Optionally, the first control channel includes a synchronization channel, a control channel, an operation and maintenance OM channel, a fast control channel, a code check channel, or an extensible vendor-specific channel. Based on a structure of the data frame provided in this application, control channel types are diversified, and more functions can be carried.

According to the control signaling transmission method provided in this embodiment of this application, the first communication node sends the first control signaling by using the frame slice. The frame slice is obtained by dividing the data frame in the time dimension, and the frame slice obtained by performing timing-based division based on the data frame can meet communication requirements for high-precision synchronization and control with high real-time performance. A multi-function interface based on a communication node can meet functions such as synchronous timing, message communication, and real-time control between communication nodes. In addition, evolution of communication bandwidth may be decoupled from a service capacity, so that system complexity and software and hardware overheads can be reduced. More functions can be carried and derived based on a flexible frame structure. In addition, the link negotiation mechanism can further ensure interface stability and robustness.

The control signaling transmission method provided in this application may be applied to control signaling transmission between base station devices, but is not limited to an application scenario of the wireless base station. The method may be used in components or systems that have requirements on low bandwidth, low costs, real-time performance, reliability, evolvability, and the like, for example, in an industrial control scenario. The following uses control signaling transmission between a hub unit and a remote radio unit in a base station as an example to describe a communication node interaction method provided in embodiments of this application. Refer to FIG. 8.

801: The hub unit sends a synchronization frame to the remote radio unit.

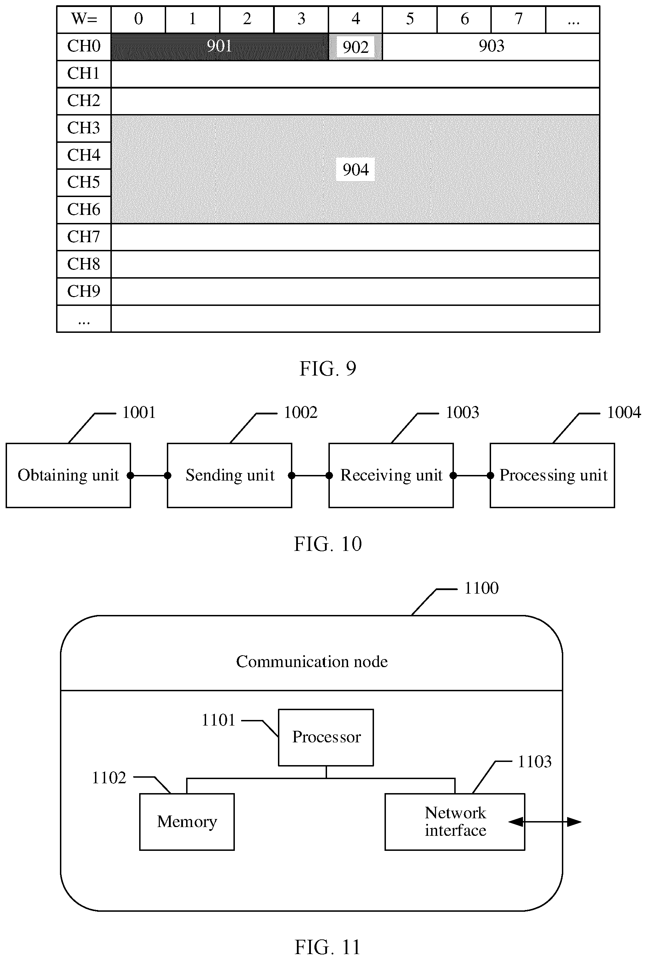

To establish communication, the hub unit and the remote radio unit need to be synchronized first. Specifically, the hub unit sends the synchronization frame to the remote radio unit. A frame header (also referred to as a synchronization header) of the synchronization frame carries synchronization information, and a data field of the synchronization frame is set to 0, that is, an empty frame. Optionally, a plurality of empty frames may be sent, so that a communication peer end stably confirms a location of the synchronization frame. Optionally, the synchronization header includes status information, the status information indicates a status existing when a first communication node sends the synchronization frame, and the status includes an initial state or a synchronization state. For example, refer to FIG. 9. In the synchronization frame, CH₀ is a synchronization channel, a part 901 is a control word, a part 902 is status information (state), and a part 903 is a number of each frame, and is used to determine a specific synchronization time location. Other parts of the data frame are empty. For example, a control channel 904 is empty.

802: The remote radio unit returns synchronization confirmation information to the hub unit.

After obtaining the synchronization frame, the remote radio unit may return the synchronization confirmation information to the hub unit. Optionally, the communication nodes implement synchronization through status negotiation. A specific process of a status negotiation mechanism is not described herein. A second communication node returns the synchronization confirmation information to the second communication node, and further, a port working mode is set to a working state, so that control signaling can start to be sent/received. The link negotiation mechanism can further ensure interface stability and robustness.

It may be understood that each communication node may actively initiate synchronization, to be specific, alternatively, the remote radio unit may send a synchronization frame to the hub unit, and the hub unit returns synchronization confirmation information to the remote radio unit to establish synchronization. This is not specifically limited herein.

803: The hub unit sends first control signaling to the remote radio unit.

After synchronization is established, the hub unit may send the first control signaling to the remote radio unit. Herein, the first control signaling is sent by using a first frame slice of a first data frame. For a specific slice form, refer to the descriptions in the embodiment corresponding to FIG. 3. Details are not described herein again.

804: The remote radio unit performs a first action.

After receiving the first control signaling, the remote radio unit may perform the first action based on information carried in the first control signaling. It may be understood that performing the first action includes performing an action or stopping performing an action. This is not specifically limited herein.

805: The remote radio unit sends second control signaling to the hub unit.

After synchronization is established, the remote radio unit may send the second control signaling to the hub unit. Herein, the second control signaling is sent by using a second frame slice of a second data frame. For a specific slice form, refer to the descriptions in the embodiment corresponding to FIG. 3. Details are not described herein again.

806: The hub unit performs a second action.

After receiving the second control signaling, the hub unit may perform the second action based on information carried in the second control signaling. It may be understood that performing the second action includes performing an action or stopping performing an action. This is not specifically limited herein.

It should be noted that an execution sequence of steps 803 and 804 and steps 805 and 806 is not limited.

According to the control signaling transmission method provided in this embodiment of this application, after establishing synchronization by using the synchronization frame, the remote radio unit and the hub unit may send control signaling by using a frame slice of a data frame. The frame slice is obtained by dividing the data frame in a time dimension, and the frame slice obtained by performing timing-based division based on the data frame can meet communication requirements for high-precision synchronization and control with high real-time performance.

The foregoing describes the control signaling transmission method provided in this application. The following describes a communication node that implements the control signaling transmission method. FIG. 10 is a diagram of an embodiment of a communication node according to embodiments of this application.

Only one or more of modules in FIG. 10 may be implemented by using software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC).

The communication node includes:
an obtaining unit 1001, configured to obtain first control signaling; and
a sending unit 1002, configured to send the first control signaling to a second communication node by using a first frame slice of a first data frame, where the first frame slice is obtained by dividing the first data frame in a time dimension.

Optionally, the first frame slice includes a first subframe, and the first subframe is any one of a plurality of subframes obtained by equally dividing the first data frame in the time dimension by using a first preset slice quantity.

Optionally, the first frame slice includes a first slot, and the first slot is any one of a plurality of slots obtained by equally dividing the first subframe in the time dimension by using a second preset slice quantity.

Optionally, the first frame slice includes a part of the first slot.

Optionally, the first data frame includes n channel sequences, the n channel sequences are obtained by dividing the first data frame in the time dimension, each channel sequence includes m ordered channels, the first frame slice includes a first control channel, and the first control channel includes one or more of the m channels, and is used to implement a first control function.

Optionally, a plurality of subframes obtained by equally dividing the first data frame in the time dimension by using a first preset slice quantity include a first subframe, the first subframe includes n channel sequences, the n channel sequences are obtained by dividing the first subframe in the time dimension, each channel sequence includes m ordered channels, the first frame slice includes a first control channel, the first control channel includes one or more of the m channels, and the first control channel is used to implement a first control function. The m channels are obtained by dividing the channel sequence in the time dimension.

Optionally, the first control channel includes a synchronization channel, a control channel, an operation and maintenance OM channel, a fast control channel, a code check channel, or an extensible vendor-specific channel.

Optionally, the sending unit 1002 is further configured to send a synchronization frame to the second communication node.

The communication node further includes: a receiving unit 1003, configured to receive synchronization confirmation information returned by the second communication node; and
a processing unit 1004, configured to set a port working mode to a working state based on the synchronization confirmation information, where the working state is used to send real-time control signaling to the second communication node, and the control signaling includes the first control signaling.

Optionally, the receiving unit 1003 is further configured to receive second control signaling sent by the second communication node by using a second frame slice of a second data frame. The second frame slice is obtained by dividing the first data frame in the time dimension.

The processing unit 1004 is further configured to perform an action based on the second control signaling.

FIG. 11 is a diagram of another embodiment of a communication node according to embodiments of this application.

The communication node provided in this embodiment includes a communication interface. The communication node may be a base station device, for example, a baseband unit, a hub unit, or a remote radio unit, or a communication node in process control. A specific device form of the communication node is not limited in this embodiment of this application.

The communication node 1100 may vary greatly with configuration or performance, and may include one or more processors 1101 and a memory 1102. The memory 1102 stores a program or data.

The memory 1102 may be a volatile memory or a non-volatile memory. Optionally, the processor 1101 is one or more central processing units (central processing unit, CPU), and the CPU may be a single-core CPU, or may be a multi-core CPU. The processor 1101 may communicate with the memory 1102, and execute a series of instructions in the memory 1102 on the communication node 1100.

The communication node 1100 further includes a network interface 1103, including an optical port or an electrical port. A medium at a physical layer is not limited herein.

Optionally, although not shown in FIG. 11, the communication node 1100 may further include one or more power supplies and one or more input/output interfaces. The input/output interface may be configured to connect to a display, a mouse, a keyboard, a touchscreen device, a sensor device, or the like. The input/output interface is an optional component, and may exist or may not exist. This is not limited herein.

For a procedure performed by the processor 1101 in the communication node 1100 in this embodiment, refer to the method procedure described in the foregoing method embodiments. Details are not described herein again.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A control signaling transmission method, comprising:
obtaining, by a first communication node, first control signaling; and
sending, by the first communication node, the first control signaling to a second communication node by using a first frame slice of a first data frame, wherein the first frame slice is obtained by dividing the first data frame in a time dimension.

2. The method according to claim 1, wherein the first frame slice comprises a first subframe, and the first subframe is any one of a plurality of subframes obtained by equally dividing the first data frame in the time dimension by using a first preset slice quantity.

3. The method according to claim 2, wherein the first frame slice comprises a first slot, and the first slot is any one of a plurality of slots obtained by equally dividing the first subframe in the time dimension by using a second preset slice quantity.

4. The method according to claim 3, wherein the first frame slice comprises a part of the first slot.

5. The method according to claim 1, wherein the first data frame comprises n channel sequences, the n channel sequences are obtained by dividing the first data frame in the time dimension, each channel sequence comprises m ordered channels, the first frame slice comprises a first control channel, the first control channel comprises one or more of the m channels, and the first control channel is used to implement a first control function.

6. The method according to claim 1, wherein a plurality of subframes obtained by equally dividing the first data frame in the time dimension by using a first preset slice quantity comprise a first subframe, the first subframe comprises n channel sequences, the n channel sequences are obtained by dividing the first subframe in the time dimension, each channel sequence comprises m ordered channels, the first frame slice comprises a first control channel, the first control channel comprises one or more of the m channels, and the first control channel is used to implement a first control function.

7. The method according to claim 5 or 6, wherein the first control channel comprises:
a synchronization channel, a control channel, an operation and maintenance OM channel, a fast control channel, a code check channel, or an extensible vendor-specific channel.

8. The method according to any one of claims 1 to 7, wherein before the sending, by the first communication node, the first control signaling to a second communication node by using a first frame slice of a first data frame, the method further comprises:
sending, by the first communication node, a synchronization frame to the second communication node;
receiving, by the first communication node, synchronization confirmation information returned by the second communication node; and
setting, by the first communication node, a port working mode to a working state based on the synchronization confirmation information, wherein the working state is used to send real-time control signaling to the second communication node, and the control signaling comprises the first control signaling.

9. The method according to any one of claims 1 to 8, wherein the method further comprises:
receiving, by the first communication node, second control signaling sent by the second communication node by using a second frame slice of a second data frame, wherein the second frame slice is obtained by dividing the first data frame in the time dimension; and
performing, by the first communication node, an action based on the second control signaling.

10. A communication node, comprising:
an obtaining unit, configured to obtain first control signaling; and
a sending unit, configured to send the first control signaling to a second communication node by using a first frame slice of a first data frame, wherein the first frame slice is obtained by dividing the first data frame in a time dimension.

11. The communication node according to claim 10, wherein
the sending unit is further configured to send a synchronization frame to the second communication node; and
the communication node further comprises:
a receiving unit, configured to receive synchronization confirmation information returned by the second communication node; and
a processing unit, configured to set a port working mode to a working state based on the synchronization confirmation information, wherein the working state is used to send real-time control signaling to the second communication node, and the control signaling comprises the first control signaling.

12. The communication node according to claim 10 or 11, wherein the receiving unit is further configured to:
receive second control signaling sent by the second communication node by using a second frame slice of a second data frame, wherein the second frame slice is obtained by dividing the first data frame in the time dimension; and
the processing unit is further configured to perform an action based on the second control signaling.

13. A communication node, comprising a communication interface, one or more processors, and a memory, wherein
the communication interface is configured to send/receive control signaling;
the memory stores computer-readable instructions; and
the one or more processors read the computer-readable instructions, so that the communication node is enabled to implement the method according to any one of claims 1 to 9.

14. Abase station, comprising at least two communication nodes, wherein the communication nodes are configured to implement the method according to any one of claims 1 to 9.

15. A computer program product, comprising computer-readable instructions, wherein when the computer-readable instructions are run on a computer, the computer is enabled to perform the method according to any one of claims 1 to 9.

16. A computer-readable storage medium, comprising computer-readable instructions, wherein when the computer-readable instructions are run on a computer, the computer is enabled to perform the method according to any one of claims 1 to 9.
